# EUROPEAN PATENT APPLICATION

(11) **EP 2 562 620 A1**
(43) Date of publication of application: **27.02.2013**
(21) Application number: 12005724.5
(22) Date of filing: 07.08.2012
(51) Int. Cl.: G06F 3/01

(54) **Input unit recognizing user's motion**

(30) Priority: 23.08.2011 JP 2011181387
(71) Applicant: Hitachi Consumer Electronics Co., Ltd., Tokyo 100-0004 (JP)
(72) Inventor: Bondan, Setiawan, Tokyo 100-8220 (JP); Matsubara, Takashi, Tokyo 100-8220 (JP); Matsumoto, Kazumi, Tokyo 100-8220 (JP); Tokunaga, Tatsuya, Tokyo 100-8220 (JP)
(74) Representative: Strehl Schübel-Hopf & Partner

(57) **Abstract**

There is provided an input unit adapted for non-contact input manipulation, which permits a user to smoothly accomplish an intended input manipulation. The input unit includes: a position detecting portion for detecting a position of a manipulating object such as a user' s hand manipulating the input unit; a position change detecting portion for detecting a change in the position of a point on the manipulating object based on a detection output from the position detecting portion, the point being the closest to the position detecting portion; and an image display section. The position change detecting portion detects the change in the position of the point closest to the position detecting portion in a predetermined area. The image display section changes the display image according to a detection output from the position change detecting portion.

## Description

### BACKGROUND OF THE INVENTION

### (1)Field of the Invention

The present invention relates to an input unit and more particularly, to an input unit enhanced in usability of user interface for giving instructions to electronic devices.

### (2)Description of the Related Art

Heretofore, it has been a common practice for users to use remote controllers of imaging apparatuses such as TV sets and recorders when changing channels or controlling displays, or otherwise to use input devices such as keyboards, mouses and touch screens to input commands or data to information processors such as PCs. More recently, improved sensing technologies particularly in the field of game machines and portables provide a method which includes the steps of: recognizing user's motion by means of a sensor, determining user' s intention based on the sensor output and operating the machine.

Japanese Patent No.4318056 (hereinafter, referred to as "patent literature 1") discloses an image recognition apparatus which recognizes a hand pose or motion and identifies a manipulation.

Japanese Patent Application Laid-Open No.2008-052590 (hereinafter, referred to as "patent literature 2") discloses an interface device which implements display of input-pose picture for visually showing an input-pose recognition object representing user' s manipulation. As viewing the input-pose picture, the user can manipulate an apparatus.

Japanese Patent Application Laid-Open No.2001-216069 (hereinafter, referred to as "patent literature 3") discloses an in-vehicle device which displays icons representing input poses corresponding to user's manipulations, and executable operations. This permits the user to understand easily an input pose to take.

Japanese Patent Application Laid-Open No.2005-250785 (hereinafter, referred to as "patent literature 4") discloses a vehicular operation input unit which displays selection guide information including states of hands on the steering wheel and devices to be operated. The user can select a desired device by moving user' s hand according to the guide.

### SUMMARY OF THE INVENTION

The image recognition apparatus of the patent literature 1 generates a manipulation screen image in correspondence to the user' s body part. The user, in turn, inputs an instruction to the apparatus by positioning the user' s hand or finger at a given place on the screen image or moving the hand or finger on the screen image. The manipulation screen image represents a virtual manipulation plane which "permits an operator 102 to perform an input manipulation easily by extending a hand 601 from a marker 101 toward the screen image assumed to be a virtual manipulation plane 701, or by keeping the hand 601 in contact with and moving the hand 601 on a part of a monitor screen 111 operatively connected to the manipulation plane 701 assumed to be the touch screen (paragraph 0033)".

The apparatus of the patent literature 1 has the following problems because the manipulation plane is defined in correspondence to the part of the operator's body.
1. Since the user manipulates the virtual manipulation plane, it is difficult for the user to understand the size of an actual manipulation plane, the correspondence between the manipulation plane and the manipulation motion or the correspondence between the manipulation plane and the object displayed on the screen.
2. It is difficult to control the timing of calibration because the position of the manipulation plane is decided before the user extends the hand toward the manipulation plane. Particularly, in a case where more than one person is present before the screen, the apparatus cannot decide which of the users is to be assigned with a manipulation region.

The patent literature 2 to the patent literature 4 each disclose the arrangement in which the motion or pose for input manipulation of the apparatus is displayed so that the user makes the predetermined motion before the apparatus according to the displayed guide.

However, there is a fear that when the user is making a predetermined motion or taking a predetermined pose for manipulation purpose, a different motion or pose that the user unconsciously makes or takes before accomplishing the predetermined motion or pose is mistakenly recognized as the manipulation motion and hence, an unintended operation of the apparatus results.

None of the patent literatures contemplates an approach to make the user, who is making the motion or taking the pose for manipulation purpose, intuitively understand how the user's motion or pose corresponds to a physical object or an object displayed on the screen and how the user's motion or pose is recognized as the manipulation.

All the patent literatures disclose the input devices adapted to recognize the predetermined hand pose or the like for detection of the input manipulation. However, the recognition of the hand pose or the like requires operations for comparing the detected image with the predetermined pose model for reference, learning the predetermined hand poses and such. This leads to a fear that the input devices suffer high processing load and take much process time for recognition.

In this connection, the invention seeks to overcome the above problems. The invention has an object to provide a non-contact input unit that detects a point on an operating object which point is the closest to a sensor (hereinafter, referred to as "object detection point") and provides real-time on-screen display of the input manipulation being performed, as changing the display image with change in the position of the object detection point, thereby permitting the user to accomplish the intended input manipulation smoothly.

According to an aspect of the invention for achieving the above object, an input unit comprises: a position detecting portion for detecting a position of a point on a manipulating object such as a user's hand manipulating the input unit; a position change detecting portion for detecting a change in the position of the object detection point, as seen from the position detecting portion, based on a detection output from the position detecting portion; and an image display section. The position change detecting portion detects a change in the position of the closest point to the position change detecting portion in a predetermined area. The image display section changes the display image according to the detection output from the position change detecting portion.

According to the detection output from the position change detecting portion, the image display section changes parameters related to the quantities, such as size, length, depth and scale, and configuration of the object displayed on the display section as well as the position of the displayed object.

According to the invention, the non-contact input unit permits the user to smoothly accomplish the intended input manipulation while intuitively recognizing the manipulation being performed, thus offering an effect to improve the usability of the input unit.

### BRIEF DESCRIPTION OF THE DRAWINGS

These and other features, objects and advantages of the present invention will become more apparent from the following description when taken in conjunction with the accompanying drawings wherein:
Fig.1 is an overview diagram showing an input unit according to a first embodiment of the invention;
Fig.2 is a block diagram showing a structure of the input unit of the first embodiment;
Fig.3 is an overview diagram showing a manipulation region for the input unit of the first embodiment and a manipulation method performed by a user;
Fig.4 is an overview diagram illustrating a display corresponding to a manipulating state of the input unit of the first embodiment;
Fig.5 is a flow chart showing the steps of an operation of the input unit of the first embodiment;
Fig.6 is an overview diagram showing a manipulation region of an input unit according to a second embodiment of the invention and a manipulation method performed by the user;
Fig.7 is an overview diagram illustrating a display corresponding to a manipulating state of the input unit of the second embodiment;
Fig.8 is a flow chart showing the steps of an operation of the input unit of the second embodiment;
Fig.9 is an overview diagram illustrating a display corresponding to a manipulating state of the input unit of the second embodiment;
Fig.10 is an overview diagram showing an input unit according to a third embodiment of the invention;
Fig.11 is a block diagram showing a structure of the input unit of the third embodiment;
Fig.12 is an overview diagram showing a manipulation region of the input unit of the third embodiment and a manipulation method performed by the user;
Fig. 13 is a flow chart showing the steps of an operation of the input unit of the third embodiment;
Fig. 14 is an overview diagram showing a manipulation region of an input unit according to a fourth embodiment of the invention and a manipulation method performed by the user;
Fig. 15 is a flow chart showing the steps of an operation of the input unit of the fourth embodiment;
Fig.16 is an overview diagram showing an input unit according to a fifth embodiment of the invention;
Fig. 17 is a block diagram showing a structure of the input unit of the fifth embodiment;
Fig. 18 is a flow chart showing the steps of an operation of the input unit of the fifth embodiment;
Fig.19 is an overview diagram showing an input manipulation space of the input unit of the fifth embodiment;
Fig.20 shows a distance table of the input unit of the fifth embodiment;
Fig.21A is a first overview diagram illustrating a method of detecting a pointer of an input unit according to a sixth embodiment of the invention;
Fig.21B is a second overview diagram illustrating the method of detecting the pointer of the input unit of the sixth embodiment;
Fig.22A is a first overview diagram illustrating a method of detecting a pointer of an input unit according to a seventh embodiment of the invention;
Fig.22B is a second overview diagram illustrating the method of detecting the pointer of the input unit of the seventh embodiment; and
Fig.22C is a third overview diagram illustrating the method of detecting the pointer of the input unit of the seventh embodiment.

### DETAILED DESCRIPTION OF THE EMBODIMENT

The embodiments of the invention will be described as below.

### [First Embodiment]

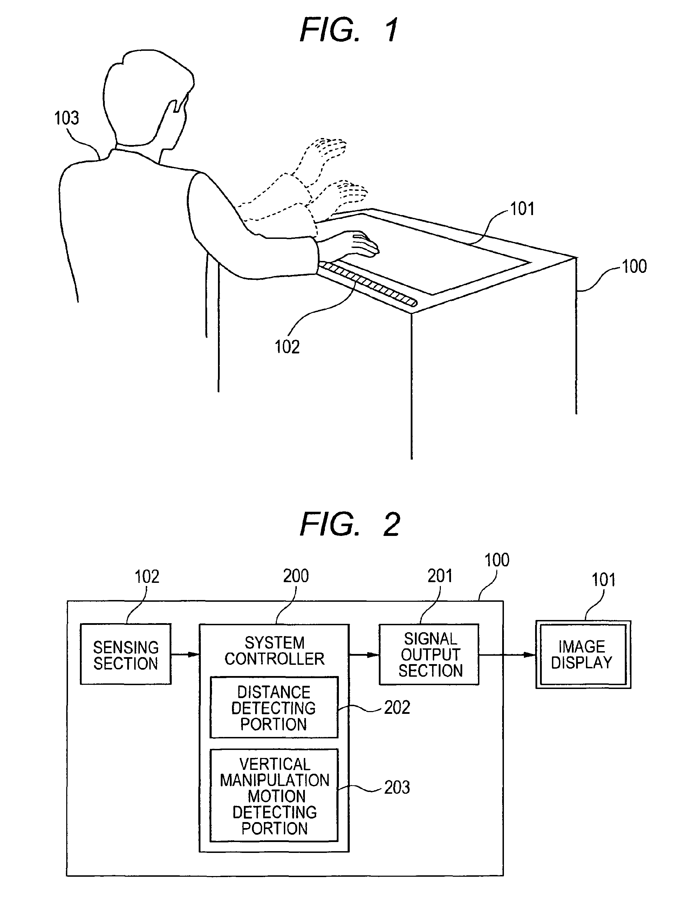

A first embodiment of the invention will be described hereinbelow with reference to Fig.1 to Fig.5. An input unit 100 of the embodiment is an apparatus that detects a distance between a user' s hand and the input unit 100 by means of a sensor and gives an operating command to an image display 101 according to the detected distance.

First, description is made on a structure of the input unit according to the first embodiment with reference to Fig.1 and Fig.2.

Fig. 1 is an overview diagram showing the input unit 100 of the first embodiment. The diagram shows an overview of an operating environment where a user 103 operates the input unit 100 employing the image display 101 and a sensing section 102.

The image display 101 is a device that displays image information to the user based on an operation signal inputted to the image display 101 from an external source. The image display 101 includes, for example: a display unit such as LCD (Liquid Crystal Display), PDP (Plasma Display Panel), liquid crystal projector, laser projector and rear projector; an arithmetic processor performing calculations necessary for displaying visual contents or GUI (Graphical Use Interface); and a memory.

The sensing section 102 is a component for detecting a distance between a hand of the user 103 and the sensor. The sensing section includes, for example: a sensor such as infrared distance sensor, laser distance sensor, ultrasonic distance sensor, distance image sensor and electric field sensor; a microcomputer (hereinafter, abbreviated as "micom") performing data processing; and a software operating on the micom. The sensor employed by the sensing section is not particularly limited and may be any sensor that has a function to convert a signal obtained for detection of a distance to the user's hand into distance data.

The user 103 is a user who operates the inputs unit 100.

Fig.2 is a block diagram showing a structure of the input unit 100 of the first embodiment.

As shown in Fig.2, the input unit 100 includes the sensing section 102, a system controller 200 and a signal output section 201.

The system controller 200 includes a distance detecting portion 202 and a vertical manipulation motion detecting portion 203.

The distance detecting portion 202 is a component that performs an operation of extracting or sorting out a detected distance from distance data retrieved from the sensing section 102. The vertical manipulation motion detecting portion 203 is a component for detecting a vertical manipulation motion of the user' s hand 103 from the distance detected by the distance detecting portion 202.

The system controller 200 is a component that performs data processing for detecting a distance of the user's hand 103 from the sensing section 102 and for detecting a vertical manipulation motion of the hand. The system controller 200 may be implemented by executing a software module stored on the memory or implemented in a dedicated hardware circuit.

A signal output section 201 is a component that receives an instruction and data from the system controller 200 and outputs an image signal to carry out image display on the image display 101.

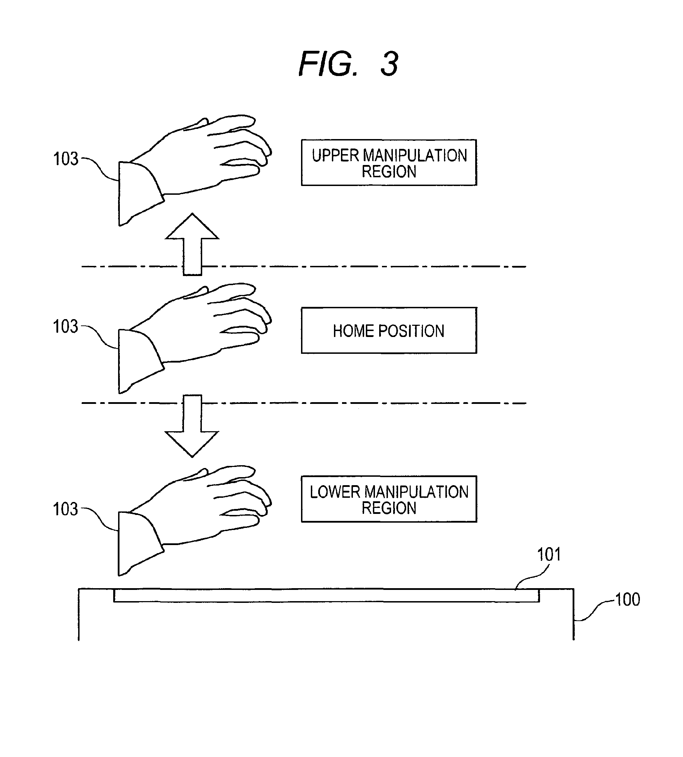

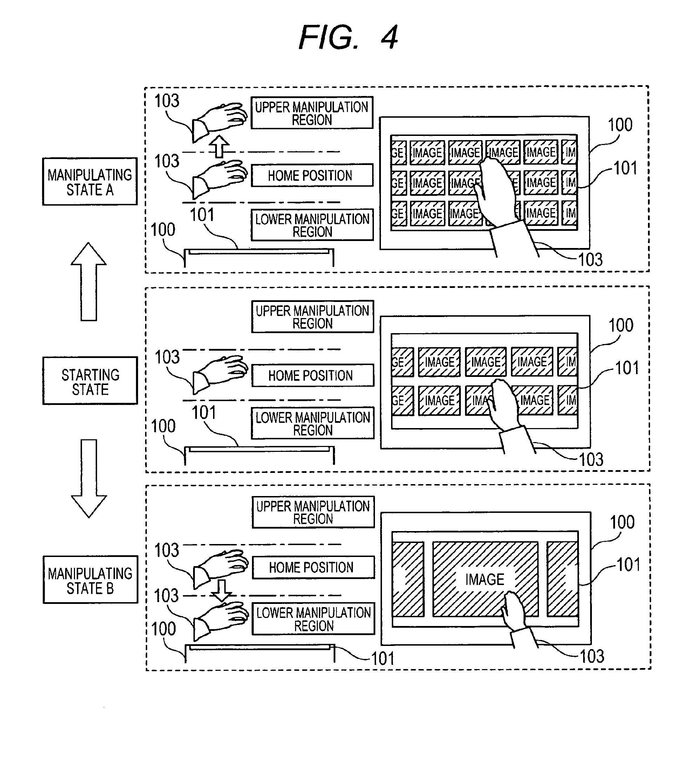

Now referring to Fig.3 and Fig.4, description is made on an operation method performed on the input unit 100 according to the first embodiment.

Fig.3 is an overview diagram showing a manipulation region of the input unit 100 of the first embodiment and a manipulation method performed by the user. As shown in Fig. 3, the input unit 100 retrieves from the sensing section 102 a distance of the user's hand from the sensing section 102 and determines, from the detected distance, in which of three manipulation regions the user's hand is placed, the regions including an upper manipulation region, a home position and a lower manipulation region. The manipulation region is a conceptual region defined for illustration of a method of detecting a manipulation motion made by the user 103. The manipulation region is assumed to be present in a space around the location of the hand laid by the user 103 manipulating the input unit.

Fig.4 is an overview diagram illustrating a display corresponding to a manipulating state of the input unit of the first embodiment. The diagram shows a display allowing viewing of manipulation images on the image display 101. The diagram shows how the size and number of images to be viewed are changed.

As shown in Fig.4, the input unit 100 according to the first embodiment displays the manipulation images which are changed as follows. As viewing the image display 101, the user 103 operates the input unit 100 with hand, and the input unit 100 detects a distance of the hand to the sensing section 102. Based on the detected distance, the input unit 100 changes the display on the image display 101. As illustrated by a "starting state" shown in Fig.4, for example, it is assumed that the hand of the user 103 is placed at "home position" shown in Fig. 3. Subsequently, as illustrated by a "manipulating state A" shown in Fig. 4, the user 103 moves the hand from the "home position" shown in Fig. 3 to an "upper manipulation region" in Fig. 3. Then, the image display 101 changes the on-screen display of images, which decrease in size but increase in number.

As illustrated by a "manipulating state" of Fig. 4, on the other hand, when the user 103 moves the hand from the "home position" of Fig.3 to a "lower manipulation region" of Fig.3, the image display 101 changes the on-screen display of images, which increases in size but decreases in number. Specifically, when the detected position of the user's hand 103 is moved from the "home position" of Fig. 3 to the "upper manipulation region" of Fig. 3 or the "lower manipulation region" of Fig. 3, the input unit 100 gives the image display 101 an instruction corresponding to a moving direction of the user' s hand 103, so as to change the display on the image display 101.

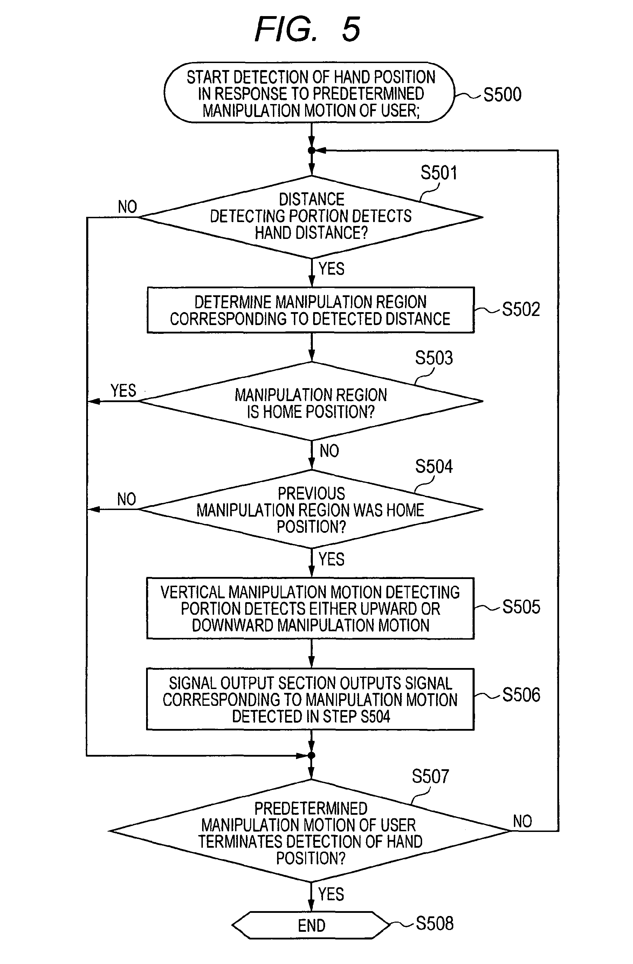

Fig.5 is a flow chart showing the steps of an operation of the input unit 100. Referring to Fig. 5, description is made on a procedure taken by the input unit 100 for detecting an input manipulation.

The detection of the input manipulation is an operation performed by the system controller 200 shown in Fig.2.

First, the system controller 200 starts to detect a hand position in response to a predetermined manipulation motion of the user (Step S500). The distance detecting portion 202 extracts or sorts out a detected distance from the distance data retrieved from the sensing section 102 so as to detect a distance of the hand from the sensing section 102. When the hand distance is detected ("Yes" in Step S501), the system controller determines a manipulation region corresponding to the detected distance (Step S502).

In a case where the manipulation region where the hand is present is the home position ("Yes" in Step S503), the controller proceeds to Step S507 to be described hereinlater. In a case where the manipulation region where the hand is present is the home position ("No" in Step S503), the system controller determines that the previous manipulation region was the home position ("Yes" in Step S504). Then, the vertical manipulation motion detecting portion 203 detects either an upward manipulation motion or a downward manipulation motion (Step S505). It is noted here that if it is determined in Step S504 that the previous manipulation region was not the home position ("No" in Step S504), the controller proceeds to Step S507 to be described hereinlater. That is, the manipulation motion is detected in Step S505 only when the hand position is moved from the home position to another manipulation region. When the upward or downward manipulation motion is detected, the input unit outputs an operation input signal to the image display 101 via the signal output section 201 so as to give the image display 101 an operating instruction corresponding to the detected manipulation motion (Step S506).

When the user makes a predetermined manipulation motion to indicate that the user intends to terminate the operation ("Yes" in Step S507), the controller terminates the operation (Step S508). If not ("No" in Step S507), the controller returns to Step S501 to continue the above-described detection of hand distance.

In this manner, the input unit 100 detects the manipulation motion of the user 103 according to the distance of the user's hand to the input unit 100 and gives the operating instruction to the image display 101. This permits the user 103 to intuitively recognize correspondence between the hand distance and the operation from physical distance between the device and the hand and hence, facilitates the input of an operation desired by the user 103.

### [Second Embodiment]

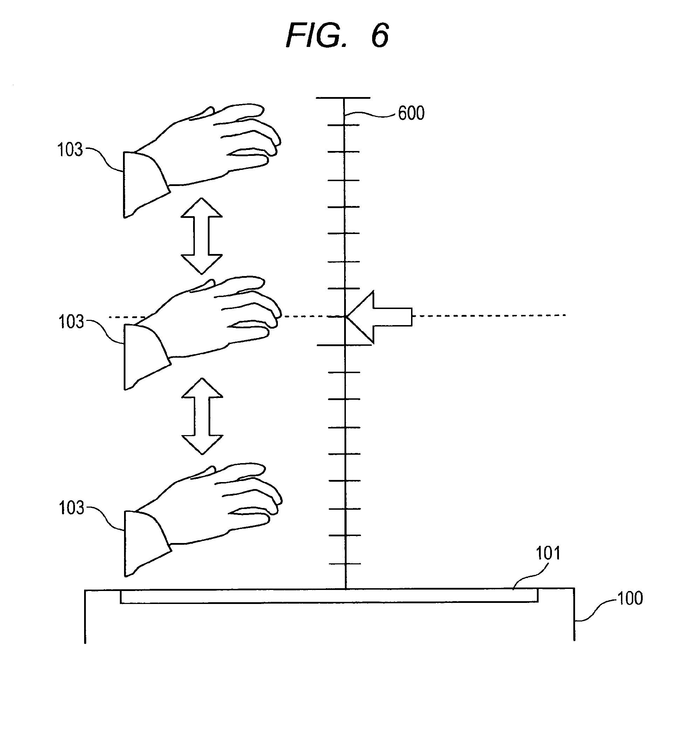

A second embodiment of the invention is described as below with reference to Fig.6 to Fig.9.

The display control method of the input unit 100 of the first embodiment provides an interface effecting the operation according to the change in the manipulation region where the hand is placed. This embodiment provides an interface that not only performs the operation method of the first embodiment but also effects the operation according to the change in relative distance between the hand and the input unit 100.

Similarly to the first embodiment, the input unit 100 of the embodiment also includes the sensing section 102, the system controller 200, and the signal output section 201, as shown in Fig.2. However, the embodiment differs from the first embodiment only in the manipulation motion which the system controller 200 detects via the vertical manipulation motion detecting portion.

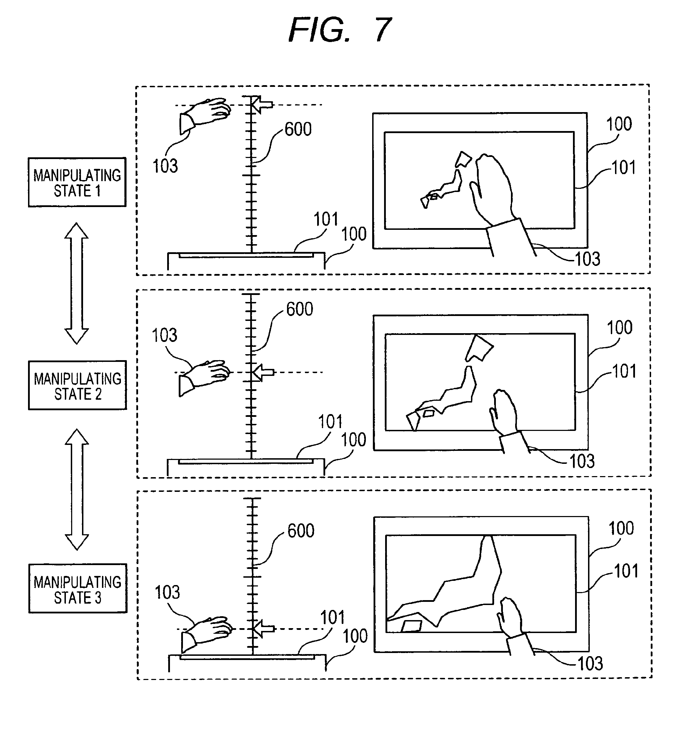

First, an operation method performed by the input unit 100 of the second embodiment is described with reference to Fig. 6 and Fig.7.

Fig.6 is an overview diagram showing a manipulation region of the input unit 100 of the second embodiment and a manipulation method performed by the user.

As shown in Fig.6, the input unit 100 detects a hand position against a manipulation-motion reference scale 600 based on the distance of the user's hand retrieved from the sensing section 102. The manipulation-motion reference scale 600 is used for measurement of size, quantity, length or the like reflected in the operation. The above manipulation-motion reference scale 600 is a conceptual reference defined for illustration of a method of detecting the manipulation motion of the user 103. The manipulation-motion reference scale is assumed to be present in a space around the location of the hand laid by the user 103.

Fig.7 is an overview diagram illustrating a display corresponding to a manipulating state of the input unit 100 of the second embodiment. In Fig. 7, a map is displayed on the image display 101. The overview diagram shows how the scale size of the map is changed according to the manipulation motion of the user 103.

As shown in Fig.7, the input unit 100 according to the second embodiment displays the manipulation images which are changed as follows. As viewing the image display 101, the user 103 operates the input unit 100 with hand while the input unit 100 detects a distance of the hand from the sensing section 102. Based on the detection result, the input unit changes the display on the image display 101. As illustrated by a "manipulating state 1" in Fig.7, for example, it is assumed that the hand of the user 103 is located near an upper part of the manipulation-motion reference scale 600. Subsequently, as illustrated by a "manipulating state 2" in Fig.7, the user 103 moves the hand to an intermediate portion of the manipulation-motion reference scale 600. Then, the map displayed on the image display 101 is enlarged in scale. Further, when the user 103 moves the hand to a lower part of the manipulation-motion reference scale 600 as illustrated by a "manipulating state 3" in Fig.7, the map displayed on the image display 101 is even more enlarged in scale.

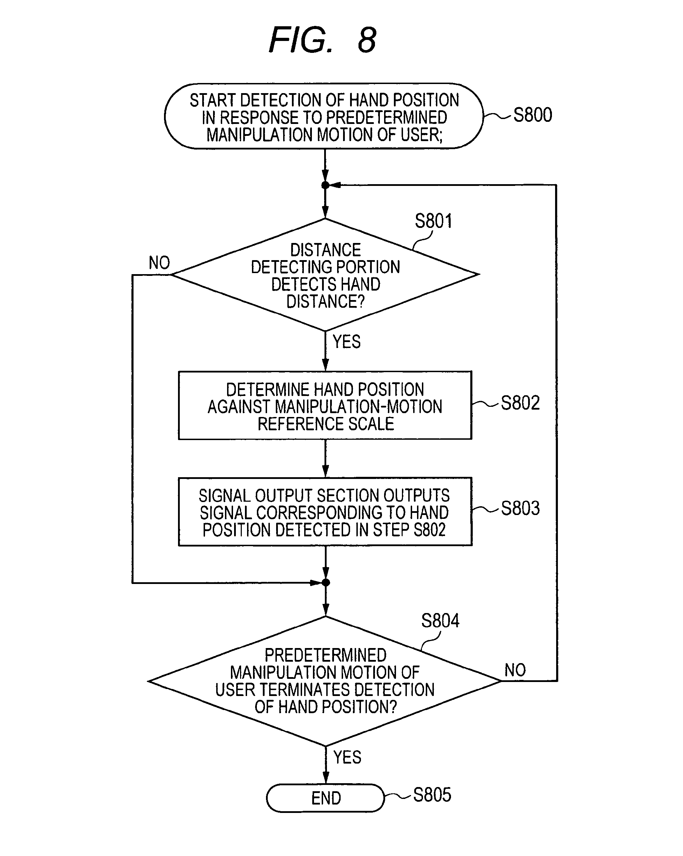

Next, a procedure taken by the input unit 100 of the second embodiment for detecting the input manipulation is described with reference to Fig.8.

Fig.8 is a flow chart showing the steps of an operation of the input unit 100 of the second embodiment.

The detection of the input manipulation is an operation performed by the system controller 200 shown in Fig.2.

First, the system controller 200 starts to detect a hand position in response to a predetermined manipulation motion of the user (Step S800). The distance detecting portion 202 detects a distance of the hand from the sensing section 102 by extracting or sorting out a detected distance from the distance data retrieved from the sensing section 102. When the hand distance is detected ("Yes" in Step S801), the system controller determines a hand position against the manipulation-motion reference scale 600 (Step S802).

Next, the signal output section 201 calculates a scale ratio of the map based on the detected hand position relative to the manipulation-motion reference scale 600 and outputs an operation input signal to the image display 101 to instruct an operation to change the scale ratio of the map (Step S803).

When the user makes a predetermined manipulation motion to indicate that the user intends to terminate the operation ("Yes" in Step S804), the controller terminates the operation (Step S805). If not ("No" in Step S804), the controller returns to Step S801 to continue the above-described detection of hand distance.

In this manner, the input unit 100 of the second embodiment detects the hand position against the manipulation-motion reference scale 600 according to the change in distance of the user's hand 103 to the input unit 100. The input unit supplies the size, quantity, length or the like representing the hand position against the manipulation-motion reference scale 600, as the operating instruction to the image display 101. This permits the user 103 to intuitively recognize the correspondence between the hand distance and the quantities of size, length, depth, scale and the like from the physical distance between the device and the hand and hence, facilitates the input of the operation desired by the user 103.

The above input manipulation is useful for executing a menu consisting of multiple levels of operations.

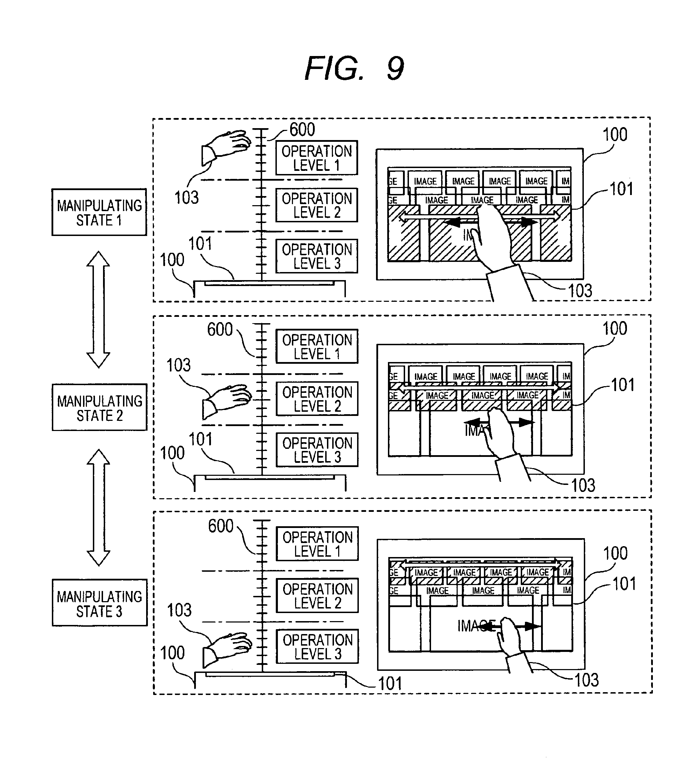

Fig.9 is an overview diagram illustrating a display corresponding to a manipulating state of the input unit of the second embodiment. In a case where a multilevel operation menu is displayed on the image display 101, as shown in Fig.9, the operation levels are allocated to the manipulation-motion reference scale 600, so that an operation level as a manipulation object can be changed by way of the hand position as indicated by the hatching in the diagram. This permits the user 103 to intuitively recognize the correspondence between the hand distance and the operation level as the manipulation object, from the physical distance between the device and the hand and hence, facilitates the input of the operation desired by the user 103.

### [Third Embodiment]

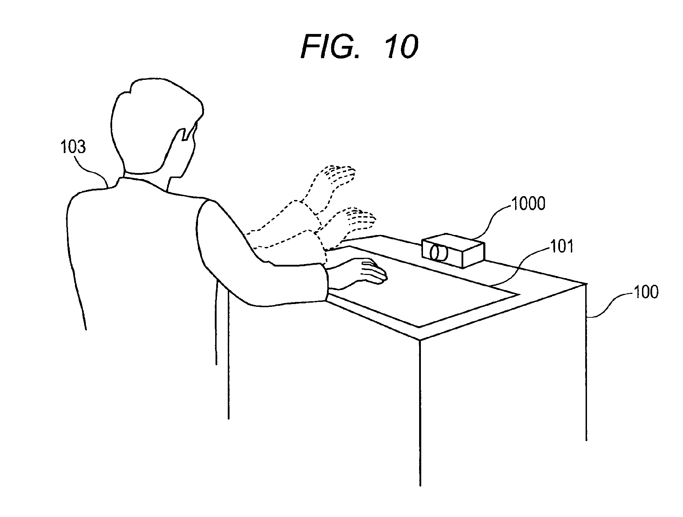

A third embodiment of the invention is described as below with reference to Fig.10 to Fig.13.

The display control method of the input unit 100 of the first embodiment provides the interface effecting the operation according to the distance between the hand and the input unit 100. This embodiment provides an interface that not only performs the operation method of the first embodiment but also defines a criterion for detecting distance according to hand pose in the detection of the distance between the hand and the input unit 100.

Fig.10 is an overview diagram showing an input unit 100 of a third embodiment of the invention.

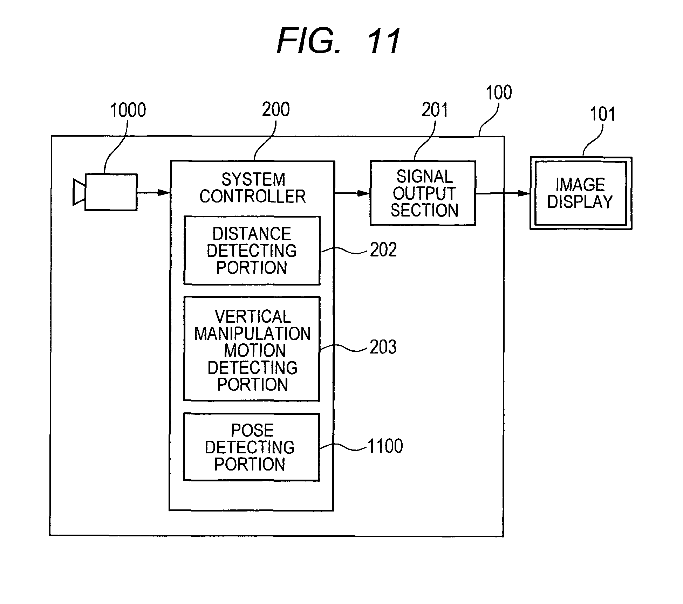

Fig.11 is a block diagram showing a structure of the input unit 100 of the third embodiment.

Similarly to the first embodiment, the input unit 100 of this embodiment also includes the system controller 200 and the signal output section 201, as shown in Fig.10 and Fig.11. However, the embodiment differs from the first embodiment in that the sensing section 102 is replaced by an image pickup section 1000 and that the system controller 200 further includes a pose detecting portion 1100. As shown in Fig.10, therefore, the image pickup section 1000 may be disposed at a different position from that of the sensing section 102 of Fig.1 so that the image pickup section 1000 can capture clearly a pose made by fingers. Furthermore, the input unit may also be equipped with both the sensing section 102 of Fig.1 and the image pickup section 1000 of Fig.10.

The image pickup section 1000 is a device for capturing an image of the user's hand and may employ, for example, an infrared camera equipped with a TOF (Time of flight) sensor function, a stereo camera or an RGB camera. The camera used as the image pickup section 1000 is not particularly limited. Any camera is usable that has a function to capture an image to be converted into digital data for identification of the user though image recognition.

The pose detecting portion 1100 is a component that detects a predetermined hand pose from the image captured by the image pickup section 1000. The pose detecting portion 1100 uses, for example, an image analysis method such as pattern matching. The image analysis method used by the pose detecting portion 1100 is not particularly limited. It is only necessary for the pose detecting portion 1100 to have a function to determine whether the captured image contains a predetermined hand pose or not and to detect a distance and position of the hand.

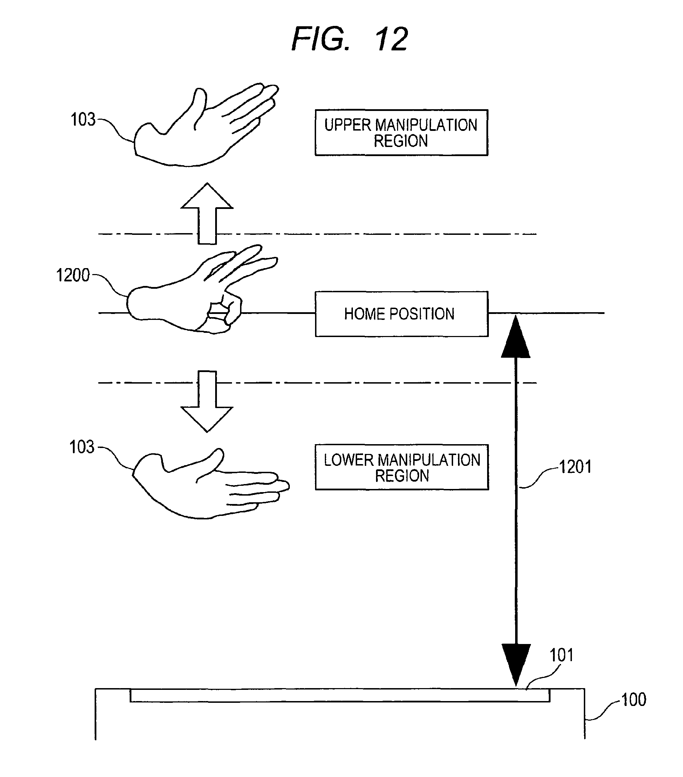

Now referring to Fig.12, description is made on a manipulation motion detection method of the input unit 100 of the third embodiment.

Fig.12 is an overview diagram showing a manipulation region of the input unit 100 of the third embodiment and a manipulation method performed by the user.

As shown in Fig.12, the input unit 100 detects a hand pose 1200 from the image captured by the image pickup section 1000 and defines a distance between the input unit 100 having detected the hand pose 1200 and the user's hand 103 as a detection criterion 1201. Based on the detection criterion 1201, the input unit 100 also changes the position of the manipulation region illustrated by the first embodiment. The same operation as in the first embodiment is performed after the change of the manipulation region.

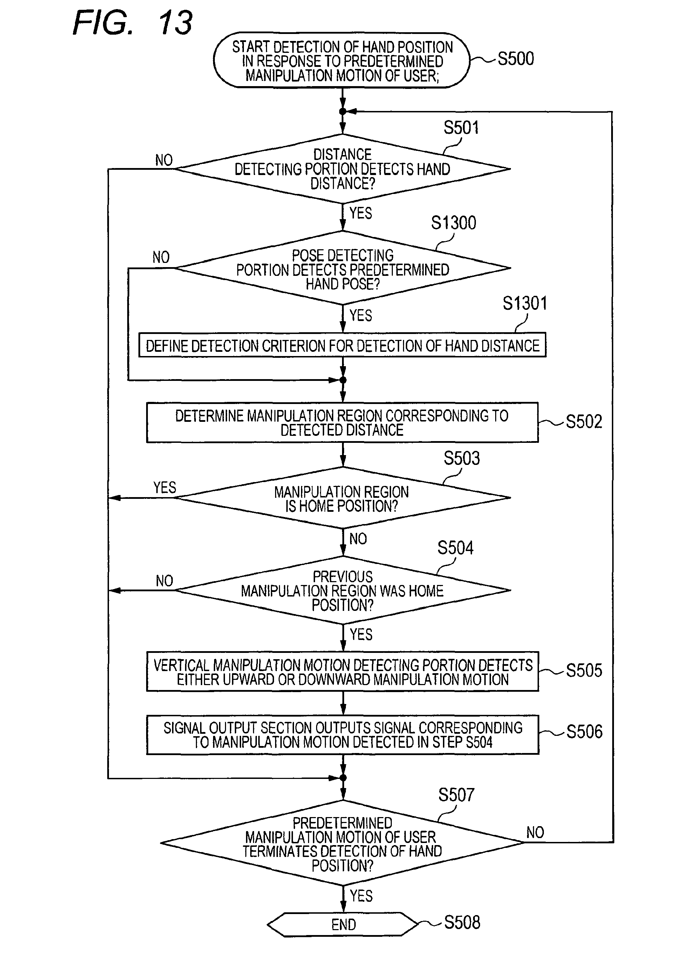

Next, a procedure taken by the input unit 100 of the third embodiment for detecting the input manipulation is described with reference to Fig.13.

Fig. 13 is a flow chart showing the steps of an operation of the input unit 100 of the third embodiment. In the operation flow of this chart, additional Step S1300 and Step S1301 are inserted between Step S501 to detect the hand position and Step S502 to determine the manipulation region.

The detection of the input manipulation is an operation performed by the system controller 200 shown in Fig.11.

First, the system controller 200 starts to detect the hand position in response to a predetermined manipulation motion of the user (Step S500). The distance detecting portion 202 detects the hand from the image captured by the image pickup section 1000. Then, the distance detecting portion 202 detects the hand distance by extracting or sorting out the distance equivalent to the manipulation motion. When the hand distance is detected ("Yes" in Step S501), the pose detecting portion 1100 performs an operation to detect the predetermined hand pose 1200 (Step S1300). The predetermined hand pose may be defined as, for example, a hand symbol making a circle between the thumb and index finger as exemplified by the hand pose representing the "home position" shown in Fig.12. When the predetermined hand pose 1200 is detected ("Yes" in Step S1300), the system controller defines the criterion 1201 for detection of the hand distance (Step S1301). Subsequently, the steps from S502 onward are performed.

On the other hand, in a case where the predetermined hand pose 1200 is not detected ("No" in Step S1300), the system controller does not define the detection criterion 1201 and the steps from S502 onward are performed. The steps from S502 onward are the same as those of the flow chart of Fig.5 illustrated by the first embodiment. That is, the operation of Fig.13 differs from that of Fig.6 in that the hand pose of the user 103 is detected and the detected hand pose provides for the definition of the home position.

In this manner, the input unit 100 of the third embodiment defines the detection criterion 1201 according to the hand pose which the user 103 strikes for the input unit 100. This permits the user 103 to change the relative position between the hand and the manipulation region at a desired time. Hence, the user 103 can more positively accomplish the input manipulation at any position.

### [Fourth Embodiment]

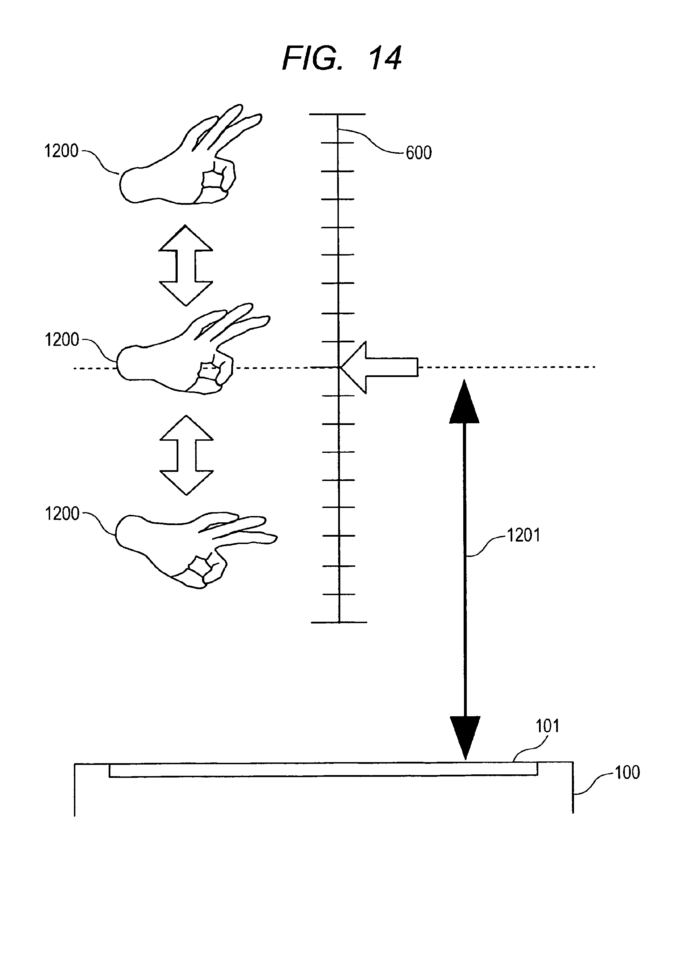

A fourth embodiment of the invention is described as below with reference to Fig.14 to Fig.15.

The display control method of the input unit 100 of the third embodiment permits the user, who is performing the manipulation illustrated by the first embodiment, to change the relative position between the hand and the manipulation region at a desired time by defining the detection criterion 1201 based on the hand pose. The embodiment modifies the manipulation method of the third embodiment to further permit the user, who is performing the manipulation illustrated by the second embodiment, to change the relative position between the hand and the manipulation-motion reference scale 600 at a desired time.

Similarly to the third embodiment, the input unit 100 of the embodiment includes the image pickup section 1000, the system controller 200 and the signal output section 201 as shown in Fig.10 and Fig.11. However, the input unit of the embodiment differs from that of the third embodiment in that the system controller 200 takes a different detection procedure.
First, a manipulation motion detecting method of the input unit 100 of the fourth embodiment is described with reference to Fig.14.

Fig.14 is an overview diagram showing a manipulation region of the input unit 100 of the fourth embodiment and a manipulation method performed by the user.

As shown in Fig.14, the input unit 100 detects the hand pose 1200 from the image captured by the image pickup section 1000 and defines a distance between the input unit 100 having detected the hand pose 122 and the user' s hand as the detection criterion 1201. Further, the input unit 100 changes the position of the manipulation-motion reference scale 600 illustrated by the second embodiment based on the above detection criterion 1201. After the manipulation-motion reference scale 600 is changed in position, the manipulation is enabled only when the input unit continues to detect the hand pose. The manipulation method performed when the manipulation is enabled is the same as that of the second embodiment.

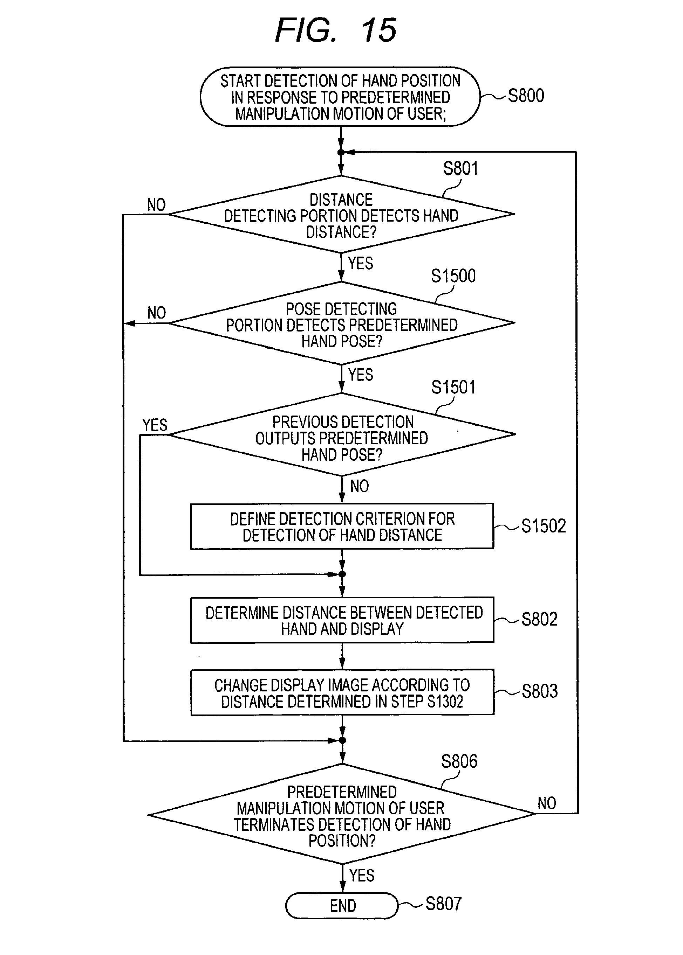

Next, a procedure taken by the input unit 100 of the fourth embodiment for detecting the input manipulation is described with reference to Fig.15.

Fig.15 is a flow chart showing the steps of an operation of the input unit 100 of the fourth embodiment. In the operation flow of this chart, additional Steps S1500 to Step S1502 are inserted in the flow chart of Fig.8 illustrated by the second embodiment.

The detection of the input manipulation is performed by the system controller 200 shown in Fig.11.

First, the system controller 200 starts to detect the hand position in response to the predetermined manipulation motion of the user (Step S800). The distance detecting portion 202 detects a hand distance by detecting the hand from the image captured by the image pickup section 1000 and extracting or sorting out the distance detected as the manipulation. When the hand distance is detected ("Yes" in Step S801), the pose detecting portion 1100 detects the predetermined hand pose 1200 (Step S1500). If the predetermined hand pose is not detected ("No" in Step S1500), the controller does not proceed to the subsequent steps but skips to Step S806. That is, the manipulation is enabled only when the predetermined hand pose is detected.

When the predetermined hand pose 1200 is detected ("Yes" in Step S1500), on the other hand, the system controller determines whether the previous detection outputted the predetermined hand pose or not (Step S1501). If the previous detection does not output the predetermined hand pose ("No" in Step S1500), the controller defines a criterion 1201 for detection of the hand distance (Step S1502) and performs the steps from Step S802 onward. If the previous detection outputted the predetermined hand pose ("Yes" in Step S1501), the controller does not define the detection criterion 1201 anew and performs the steps from Step S802 onward. The steps from Step S802 onward are the same as those of the flow chart of Fig.8 illustrated by the second embodiment.

In this manner, the input unit 100 of the fourth embodiment defines the detection criterion 1201 according the hand pose which the user 103 strikes for the input unit 100. The input unit 100 also enables the manipulation only when the user 103 strikes the predetermined hand pose for the input unit 100. This permits the user 103 to change the relative position between the hand and the manipulation reference at a desired time. In addition, the manipulation of the user 103 is enabled only when the user wants to manipulate and takes the predetermined hand pose for the input unit. Hence, the user 103 can more positively accomplish the input manipulation at any position.

As described by way of examples of the first to the fourth embodiments, the input method for the input unit of the invention differs from the prior-art techniques disclosed in the patent literatures 1 to 4. Specifically, the input method of the invention permits the user to view the display when the user extends the hand to the input unit. Further, the input method of the invention permits the user to intuitively recognize the effective input manipulation to the input unit and the manipulating state via the on-screen display varying according to the distance between the hand and the input unit. Thus, the invention can achieve enhanced operability of the input unit.

### [Fifth Embodiment]

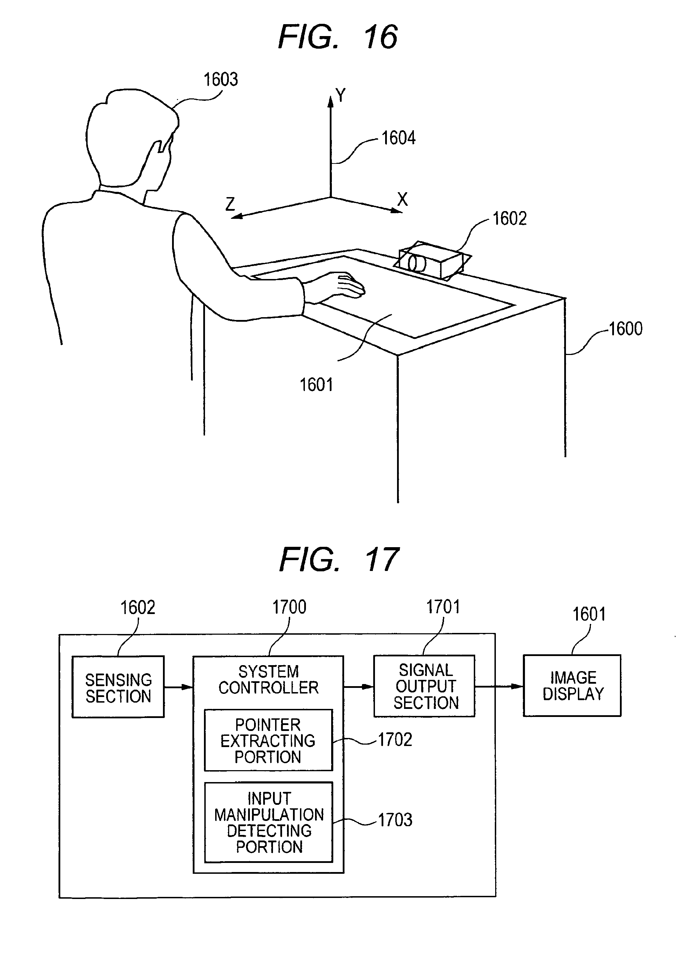

A fifth embodiment of the invention is described as below with reference to Fig.16 to Fig.20.

The input units 100 of the first to fourth embodiments are the apparatuses where the sensor recognizes the user's hand and detects the distance between the hand the input unit 100 and where the display on the image display 101 is changed according to the distance thus detected. An input unit 1600 of the embodiment is an apparatus that uses a distance detected by a sensing section 1602 to detect an object detection point and changes the display on an image display 1601 according to the change in the position of the object detection point (hereinafter, stated as "movement of the object detection point"). It is noted here that the object detection point need not necessarily be an object but may also be someone's hand or finger. Alternatively, the whole body of an object having a predetermined size or the whole body of hand or finger may also be regarded as the object detection point.

First, a structure of the input unit 1600 of the fifth embodiment is described with reference to Fig.16 and Fig.17.

Fig.16 is an overview diagram showing the input unit 1600 of the fifth embodiment. The diagram shows an overview of an operating environment where a user 1603 manipulates the input unit 1600 with the aid of the image display 1601 and the sensing section 1602.

The image display 1601 includes the same components as those of the image display 101 of the first embodiment.

The sensing section 1602 is a component that measures a distance to an object present in space forward of the sensing section 1602. The sensing section 1602 includes: a sensor such as infrared distance sensor, laser distance sensor, ultrasonic distance sensor, distance image sensor or electric field sensor; a micom performing data processing; and a software operating on the micom. The sensor employed by the sensing section 1602 is not particularly limited and may be any sensor that has a function to convert a signal obtained for detection of a distance to the object into distance data.

The user 1603 is a user who manipulates the input unit 1600.

Directional axes 1604 include X-axis, Y-axis and Z-axis perpendicular to one another and indicating respective directions in space forward of the sensing section 1602. The X-axis represents an axis extending transversely of the sensing section 1602. An X-value indicates a transverse distance from the X-position (zero) of the sensing section 1602. The Y-axis represents an axis extending in vertical direction of the sensing section 1602. A Y-value indicates a vertical distance from the Y-position (zero) of the sensing section 1602. The Z-axis represents an axis extending in depth direction of the sensing section 1602. A Z-value indicates a forward distance from the Z-position (zero) of the sensing section 1602.

The results of distance measurement taken by the sensing section 1602 are shown, for example, in a table 2000 to be described hereinlater where Z-values are plotted against XY-values (hereinafter, stated as XY coordinate values). This permits X-position, Y-position and Z-position of an object present in the forward space of the sensing section 1602 to be expressed as a combination of X-value, Y-value and Z-value (XYZ-coordinate value).

Fig. 17 is a block diagram showing a structure of the input unit 1600 of the fifth embodiment.

As shown in Fig.17, the input unit 1600 includes the sensing section 1602, a system controller 1700 and a signal output section 1701.

The system controller 1700 includes portions implementing functions of a pointer extracting portion 1702 and an input manipulation detecting portion 1703. The system controller 1700 is a portion that detects the object detection point, regards the object detection point as a pointer, and performs data processing for detecting a manipulation to the input unit 1600. Similarly to the system controller 200 of the above first embodiment, the system controller 1701 may be implemented by a CPU executing a software module stored on the memory. Alternatively, the system controller may also be implemented in a dedicated hardware circuit.

Similarly to the signal output section 201 of the above first embodiment, the signal output section 1701 is a portion that receives an instruction and data from the system controller 1700 and outputs an image signal to be displayed on the image display 1601.

The pointer extracting portion 1702 is a portion that regards the object detection point as the pointer based on the detection output from the sensing section 1602.

The input manipulation detecting portion 1703 is a portion that detects the input manipulation to the input unit 1600 from the movement of the pointer. It is noted here that the input manipulation motion is equivalent to the hand movement relative to the input unit 1600 as described in the first to the fourth embodiments. The input manipulation motion means, for example, a hand movement toward or away from the input unit 1600.

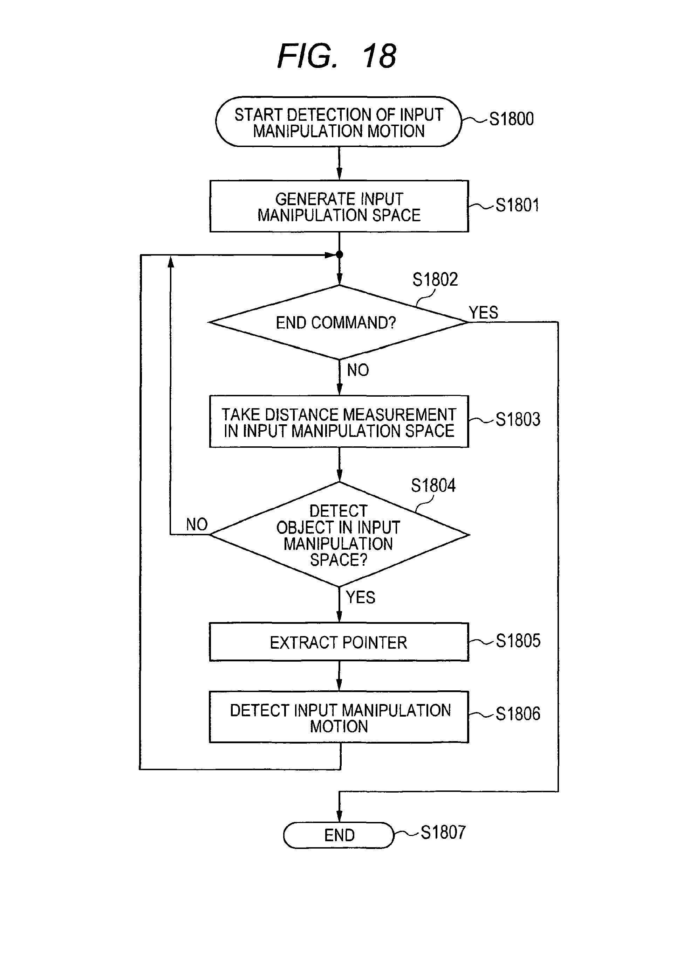

Fig. 18 is a flow chart showing the steps of an operation of the input unit 1600 of the fifth embodiment. The flow chart illustrates a procedure of detecting the input manipulation of the user.

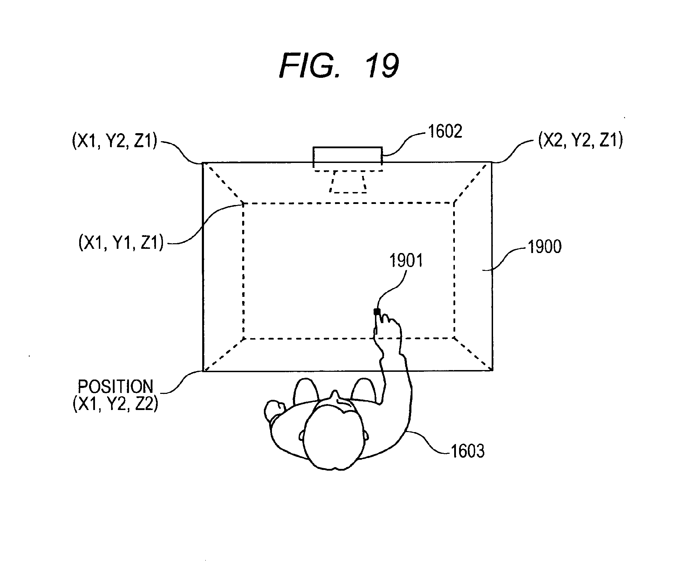

Fig.19 is an overview diagram showing an input manipulation space of the input unit 1600 of the fifth embodiment. The overview diagram shows an input manipulation space 1900 and how the user 1603 manipulates the input unit.

The input manipulation space 1900 is a three-dimensional space where an input manipulation motion of the user standing in front of the sensing section 1602 is detected. The dimensions of the input manipulation space 1900 are defined by predetermined ranges in respective directions. For example, the dimensions of the input manipulation space 1900 are defined by a range of X1 to X2 on the X-axis, a range of Y1 to Y2 on the Y-axis and a range of Z1 to Z2 on the Z-axis. An object detection point 1901 in front of the tip of finger of the user represents a point at which the user's hand is closest to the sensing section 1602.

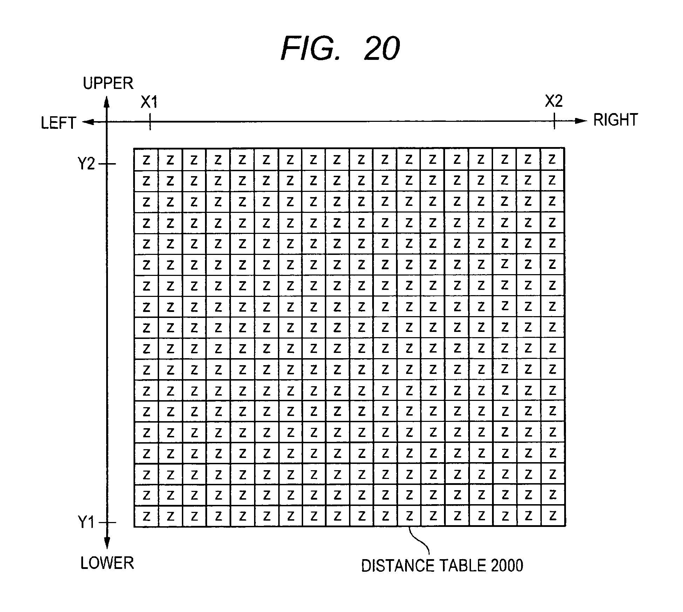

Fig.20 shows a distance table of the input unit 1600 of the fifth embodiment. The distance table shows the output of the sensing section 1602 in terms of the input manipulation space. The table 2000 shows the Z-position of each point against the XY coordinate value.

Next, a manipulation method for the input unit 1600 of the fifth embodiment is described with reference to Fig.18 to Fig.20.

When the input unit 1600 is turned on, for example, the input unit 1600 starts to detect the input manipulation (Step S1800).

When the detection of input manipulation is started, the input unit 1600 generates the input manipulation space 1900 (Step S1801).

A sequence of operations performed in Steps S1802 to S1806 to be described as below forms a loop which is repeated unless an end command is issued.

First, the system controller determines whether a command to terminate the detection of input manipulation of the user is issued or not (Step S1802). If the command is not issued, the controller proceeds to the next step ("No" in Step S1802). If the command is issued, the controller terminates the detection of input manipulation ("Yes" in Step S1802). As a method to give the detection end command, for example, the user may shut down the input unit via a predetermined switch or may perform a time out processing or the like (Step S1807).

Next, the controller operates the sensing section 1602 to measure a distance to an object in the above input manipulation space 1900 (Step S1803). The sensing section 1602 outputs the measured distances in the form of the distance table 2000 shown in Fig.20.

Next, the controller refers to the above table 2000 to determine whether an object is present in the input manipulation space 1900 or not (Step S1804). Specifically, with reference to the table 2000, the controller determines whether a point having a Z-value of 1 or more and less than 2 exist or not. If the point in question does not exist, the operation returns to Step S1802 ("No" in Step S1804). If the point in question exists, the operation proceeds to the next step ("Yes" in Step S1804).

Next, the pointer extracting portion 1702 of the input unit 1600 defines the above object detection point 1901 as the pointer (Step S1805).

Next, an input manipulation to the input unit 1600 is detected by using the change in the position of the pointer defined in Step S1805 (Step S1806). In Fig.19, when the user moves his hand, the position of the object detection point 1901 regarded as the pointer changes in conjunction with the hand movement. Therefore, the input manipulation detecting portion 1703 detects the input manipulation by analyzing the movement of the object detection point.

Similarly to the above input units of the first to fourth embodiments, the input unit changes the display on the image display 1601 in response to the manipulation motion of the user detected in Step S1806.

In this manner, the input unit 1600 of the embodiment accomplishes the operation input according to the change in the position of the object detection point. Thus, a non-contact input unit of low processing load is provided, which does not require a high-load, time-consuming processing for recognition of hand pose.

It is noted that a reference point for distance measurement, to which the above object detection point is determined to be closest may be other than the sensing section 1602. For example, the center point of a display screen of the image display 1601 or the like may be defined as the reference point for distance measurement. That is, the reference point may be set according to a place of installation of the input unit 1600 or the sensing section 1602. Even if the reference point for distance measurement is other than the sensing section 1602, the effect of the embodiment can be achieved. In addition, a proper distance measurement adapted to the installation place of the input unit 1600 or the sensing section 1602 can be accomplished. The definition of the reference point for distance measurement similarly applies to the other embodiments.

### [Sixth Embodiment]

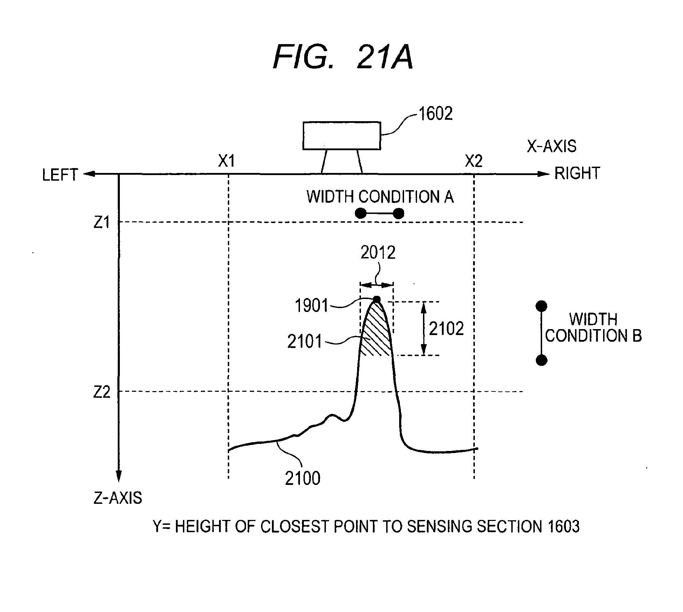

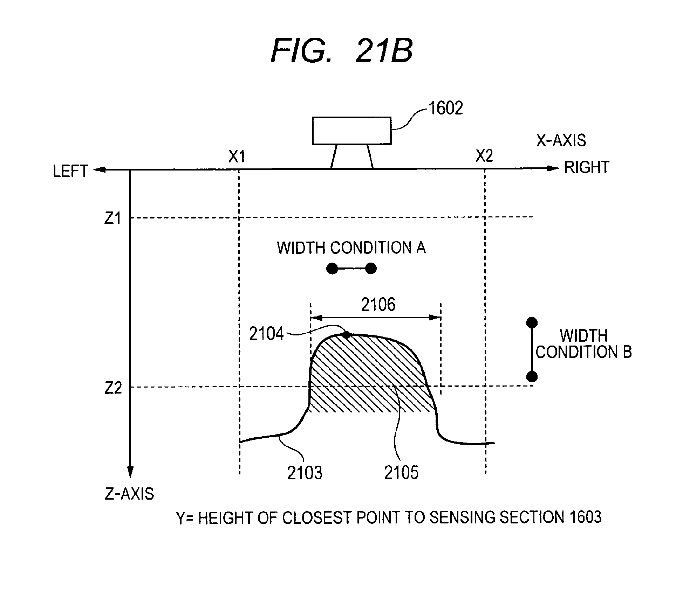

A sixth embodiment of the invention is described as below with reference to Fig.21A and Fig.21B.

The above input unit 1600 of the fifth embodiment considers the object detection point to indicate the position of the pointer, and changes the display on the image display 1601 in conjunction with the movement of the pointer. An input unit 1600 of the embodiment has the same structure as the input unit 1600 of the fifth embodiment, but adopts a different method of extracting the pointer.

Fig. 21A and Fig. 21B are overview diagrams illustrating a pointer detection method performed by the input unit of the sixth embodiment. For the extraction of the pointer of the embodiment, the overview diagrams show the Z-position of the object detection point against the X-position thereof with respect to the Y-position thereof.

A line 2100 in Fig.21A represents the Z-position of the object detection point 1901 plotted against the X-position thereof with respect to the Y-position thereof.

A line 2103 in Fig.21B represents the Z-position of an object detection point 2104 plotted against the X-position thereof with respect to the Y-position thereof in a case, for example, where a point on a large object, such as the head or body of the user 1603, that is the closest to the sensing section 1602 is detected as the object detection point 2104.

Next, description is made on the method of extracting the pointer according to the embodiment (Step S1805 in Fig.18).

First, the pointer extracting portion 1702 nominates the object detection point 1901 in Fig.21A for a pointer candidate. Subsequently, the pointer extracting portion generates a two dimensional configuration 2101 delineated by peripheral points of the object detection point 1901 on the line 2100. If the above configuration 2101 satisfies the conditions that an X-width 2102 of the configuration 2101 is within a predetermined condition width A and a Z-width 2102 thereof is within a predetermined condition width B, the input unit 1600 of the embodiment regards the object detection point 1901 as the pointer of the input unit 1600. If the above configuration does not satisfy the above conditions, the input unit does not regard the object detection point 1901 as the pointer.

The configuration and size of an object regarded as the pointer vary depending upon the decision on the ranges of the width condition A and the width condition B. As shown in Fig.21A and Fig.21B, for example, the ranges of the width condition A and the width condition B are conformed to the size of the human hand in a case where the user wants his hand to be regarded as a manipulating object.

In the case of Fig.21A, the input unit determines that the configuration 2101 satisfies the above conditions and regards the point 1901 as the pointer. In the case of Fig.21B, on the other hand, the input unit does not regard the object detection point 2104 as the pointer because a configuration 2105 delineated by peripheral points of the point 2104 has an X-width 2106 greater than the width condition A, failing to satisfy the above conditions.

While the input unit selects the pointer based on the X-width condition and the Z-width condition, the Y-width condition may also be usable.

In this manner, the input unit 1600 of the embodiment nominates, for the pointer candidate, the closest point to the sensing section 1602 in the input manipulation space 1900, and determines whether the pointer candidate is practically regarded as the pointer or not based on the size and shape of the configuration delineated by the peripheral points of the pointer candidate. This ensures that if the closest point to the sensing section 1602 is determined to exist on an object larger than the human hand, such as the head or body of the user, the input unit does not regard the point in question as the pointer. In contrast to the input unit 1600 of the fifth embodiment, the input unit 1600 of the embodiment does not mistakenly regard an object not targeted by the user as the pointer and hence, can accomplish more exact detection of the input manipulation.

While the embodiment illustrates the example where the object detection point 1901 is directly used as the pointer, another point selected based on the object detection point 1901 may also be used as the pointer. For example, in a case where an object extending around the object detection point 1901 nominated for the pointer candidate has a size and a configuration that satisfy predetermined size and configuration conditions, a position of the center point of the object around the object detection point 1901 is calculated and the center point thus determined is used as the pointer. Further in a case where the configuration of the object extending around the object detection point 1901 is determined to be that of human hand, a tip of a finger is used as the pointer. Namely, other methods may be used to calculate the position of the pointer. This makes it possible to detect a more spontaneous pointer by extrapolating a pointing direction of the finger to the object detection point 1901. The definition of the pointer is similarly applied to the other embodiments.

### [Seventh Embodiment]

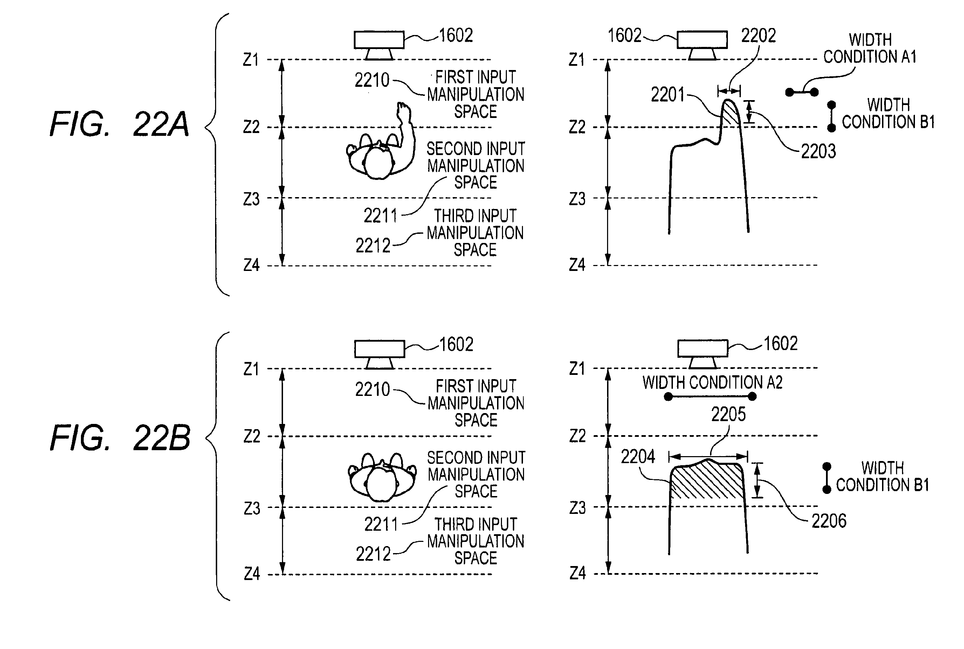

A seventh embodiment of the invention is described as below with reference to Fig.22A to Fig.22C.

The input units 1600 of the fifth and sixth embodiments regard the object detection point in one input manipulation space as the pointer, and change the display on the image display 1601 in conjunction with the movement of the pointer. The input unit 1600 of the embodiment takes the steps of generating a plurality of input manipulation spaces, changing the method of defining the pointer depending upon each of the input manipulating spaces, and detecting the input manipulation of the user.

Fig.22A to Fig.22C are overview diagrams showing conditions of the input unit 1600 and the user when the input manipulation of the user is detected in the respective input manipulation spaces of the embodiment. For the purpose of extracting the pointer, each of the overview diagrams shows the Z-distance of the closest point plotted against the X-position with respect to the Y-position of the closest point to the sensing section 1602.

In the above-described Step S1801, the input unit 1600 of the embodiment generates three input manipulation spaces. A first input manipulation space 2210 is closest to the sensing section 1602 and defined by an X-range of X1 to X2, a Y-range of Y1 to Y2 and a Z-range of Z1 to Z2. A second input manipulation space 2211 is defined by the X-range of X1 to X2, the Y-range of Y1 to Y2 and a Z-range of Z2 to Z3. A third input manipulation space 2212 is defined by the X-range of X1 to X2, the Y-range of Y1 to Y2 and a Z-range of Z3 to Z4. Along the Z-axis, the first input manipulation space 2210, the second input manipulation space 2211 and the third input manipulation space 2212 are generated in the order of increasing distance from the sensing section 1602.

Similarly to the input unit of the fifth embodiment, the input unit 1600 of the embodiment extracts the pointer by first examining the size and shape of the configuration delineated by the peripheral points of the object detection point, followed by deciding whether to regard the object detection point as the pointer or not. However, the input unit of the embodiment varies the values of the above width condition A and width condition B depending upon which of the input manipulation spaces contains the object detection point.

It is provided, for example, that the width conditions to regard the object detection point as the pointer in the first input manipulation space 2210 are width condition A1 and width condition B1. As shown in Fig.22A, when the user places his hand in the first input manipulation space 2210, the input unit regards the tip of the user's finger as the pointer because a configuration 2201 delineated by the points on the finger tip has an X-width 2202 less than the width condition A1 and a Z-width 2203 equal to or more than the width condition B1. At this time, the input unit 1600 detects the hand motion as a manipulation motion.

It is provided that the width conditions to regard the object detection point as the pointer in the second input manipulation space 2211 are width condition A2 and width condition B2. As shown in Fig.22B, when the user stands in the second input manipulation space 2211, the input unit regards the object detection point as the pointer because a configuration 2204 delineated by the peripheral points of the object detection point has an X-width 2205 less than the width condition A2 and a Z-width 2206 equal to or more than the width condition B2. In this case, the input unit 1600 can recognize that the user is in the range of Z2 to Z3.

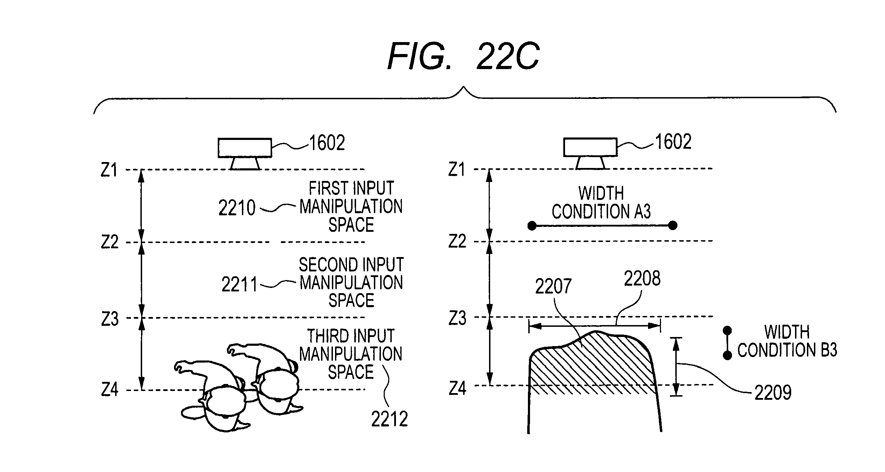

It is provided that the width conditions to regard the object detection point as the pointer in the third input manipulation space 2212 are width condition B3 and width condition B3. As shown in Fig. 22C, for example, when more than one user stands in the third input manipulation space 2212, the input unit regards the object detection point as the pointer because a configuration 2207 delineated by the peripheral points of the object detection point has an X-width 2208 less than the width condition A3 and a Z-width 2209 equal to or more than the width condition B3. In this case, the input unit 1600 can recognize that more than one user is in the range of Z3 to Z4.

The input unit 1600 of the embodiment detects a different input manipulation motion depending upon the location of the pointer, namely from which of the first input manipulation space 2210, the second input manipulation space 2211 and the third input manipulation space 2212 the pointer is detected. In a case where the pointer is detected from the third input manipulation space 2212, for example, the image display 1601 displays advertisement. In a case where the pointer is detected from the second input manipulation space 2211, the image display 1601 displays a guide image to prompt the user to come closer to the input unit. In a case where the pointer is detected from the first input manipulation space 2210, the input unit detects the hand motion and changes the image display similarly to the first to the fourth embodiments.

In this manner, the input unit 1600 of the embodiment generates a plurality of input manipulation spaces, and detects the input manipulation of the user in different ways in the respective input manipulation spaces. This permits the input unit 1600 to be assigned to different operations depending upon which of the input manipulation spaces provides the detected pointer.

According to the input method of the invention, as described with reference to the fifth to the seventh embodiments, when the user holds out the manipulating object such as hand, the tip point of the object is regarded as the pointer. When the user moves the manipulating object, the input unit can detect the input manipulation to the input unit in conjunction with the change in the position of the tip point of the hand, which is captured by the sensor. This permits the input unit to implement the input detection method of low processing load without relying on a hand-shaped device or a human body model.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims.

## Claims

1. An input unit comprising:
a sensing section for detecting an object;
a system controller for detecting manipulation by a user based on a detection output from the sensing section, and
a signal output section for outputting an image signal based on a processing of the system controller,
wherein the system controller detects the manipulation by the user based the movement of one of objects detected by the sensing section that is the closest to a predetermined reference point.

2. The input unit according to Claim 1, wherein the system controller detects the manipulation by the user based the movement of the one of the objects detected by the sensing section that is present within an area of a predetermined size and that is the closest to the predetermined reference point.

3. The input unit according to Claim 1, wherein the system controller detects the manipulation by the user based the movement of the one of the objects detected by the sensing section that is present within an area of a predetermined configuration and that is the closest to the predetermined reference point.

4. The input unit according to Claim 2, wherein the system controller divides a detection space of the sensing section into a plurality of sub-spaces and changes the area of the predetermined size based on a sub-space from which the object is detected.

5. The input unit according to Claim 3, wherein the system controller divides a detection space of the sensing section into a plurality of sub-spaces and changes the area of the predetermined configuration based on a sub-space from which the object is detected.

6. An input unit including an interface for permitting a user of a device such as an electronic device to give an instruction to the device, comprising:
a position detecting portion for detecting a position of a predetermined part of the body of the user in a predetermined detection space;
a system controller controlling the operation of the input unit and deciding whether or not to regard the position of the predetermined body portion as a manipulation reference point;
a position change detecting portion for detecting a change in the position of the predetermined body portion in a case where the system controller decides to regard the position of the predetermined body portion as the manipulation reference point; and
a display section for displaying a predetermined image in response to a command from the system controller;
wherein the system controller changes the image displayed on the display section based on a detection output from the position change detecting portion detecting the change of position.

7. The input unit according to Claim 6, wherein the system controller reduces or enlarges the image displayed on the display section according to a distance of the predetermined portion of the user's body from the input unit, the predetermined portion of the user' s body detected by the position detecting portion.

8. The input unit according to Claim 6, wherein when deciding whether or not to regard the position of the predetermined body portion as the manipulation reference point, the system controller makes decision based on a configuration of the predetermined portion of the user's body.

9. An input unit including an interface for permitting a user of a device such as an electronic device to give an instruction from a predetermined detection space in the vicinity of the device, comprising:
an object size detecting portion for detecting the size of an object;
a system controller controlling the operation of the input unit and deciding a reference point for manipulation by the user;
a position change detecting portion for detecting a change in the position of the user relative to the reference point decided by the system controller; and
a display section for displaying a predetermined image in response to a command from the system controller;
wherein the object size detecting portion detects the size of an object in the vicinity of one of predetermined positions defined in the detection space that is the closest to the input unit, and
if the size of the object is larger than a predetermined value, the system controller decides the closest one of the predetermined positions as the manipulation reference point and changes the image displayed on the display section based on a detection output from the position change detecting portion detecting the change of position.

10. The input unit according to Claim 9, wherein the system controller divides the detection space into a plurality of sub-spaces and defines the predetermined value for the size of the object detected from each of the detection sub-spaces by the object size detecting portion, the predetermined value for the object size varying from the sub-space to sub-space.
